# EUROPEAN PATENT APPLICATION

(11) **EP 4 807 329 A1**
(43) Date of publication of application: **16.09.2026**
(21) Application number: 26162514.9
(22) Date of filing: 05.03.2026
(51) Int. Cl.: G01G 23/00

(54) **LEVELING DEVICE WITH LOAD CONTROL**

(30) Priority: 13.03.2025 IT 202500005136
(71) Applicant: A.T.P. S.p.A., 41122 Modena (IT)
(72) Inventor: SASSI, Alessandro, I- 41122 Modena (MO) (IT); BACCOLINI, Davide, I- 41122 Modena (MO) (IT)
(74) Representative: Long, Giorgio

(57) **Abstract**

The present invention refers to a heavy-duty levelling device, of a type used for example in shipyards.

In particular, the invention concerns a heavy-duty support device (1) comprising a first and a second wedge support element (2, 3), a first and a second wedge adjusting element (4, 5), and an organ adjusting (6) the reciprocal distance between these first and second adjusting wedge elements (4, 5), **characterized by the fact that** the support device (1) includes a sensor device configured to provide an overload or alarm signal in the event of a predetermined limit load being exceeded.

## Description

### Technical field of invention

The present invention refers to a heavy-duty levelling device, of a type used for example in shipyards.

### State of the art

A problem felt in the manufacture of objects of high size and weight is that of keeping the object under construction on a substantially horizontal plane, so as to avoid its imbalance with serious consequences for men, apparatuses and installations. A typical example is shipbuilding in shipyards.

For this purpose, adjustable supports, known as levelers, are used, which are placed between the ground and the object to be supported, typically but not exclusively the hull of a ship, and which, depending on the size and weight of the body to be supported, can also be used in large numbers, for example hundreds or even thousands.

The leveller is an element capable of supporting loads and, by means of an adjustment screw, varying the height of the same at will to keep the weight at a desired height. The structure of the leveller allows it to work both individually and in combination with other levelers in order, if necessary, to distribute the load and distribute it among the various elements.

However, the current state of the art does not provide for a system for evaluating the real load applied to the individual leveler. The user evaluates the load applied to the individual leveller by estimating the weight of the total load and its distribution among the various levellers adopted. To date, it is just possible to assess the torque required for nut tightening once the load has been applied.

In particular, since it is known that a large body such as a ship almost never has a weight uniformly distributed in its structure, it is not currently possible to determine whether one or more levellers support an excessively high weight, such as to compromise the stability of the support.

### Summary of the invention

The subject of this invention is a heavy-duty support device, also known as a leveller, as outlined in the attached claims, the definitions of which form an integral part of this description for the purpose of sufficient description.

A further object is a system comprising a plurality of levellers and a command and control unit for the management of these levellers.

The objects of this description and of the figures are therefore:
(1) a heavy-duty support device comprising a first and a second wedge support element, a first and a second adjusting wedge element, and a member for adjusting the reciprocal distance between said first and second adjusting wedge elements, in which the first wedge support element comprises an upper face, configured for the support of the heavy load, and two converging oblique faces, and in which the second support wedge element includes a lower face, configured for the support device to rest on a fixed surface, and two converging oblique faces, the first and the second support wedge element being arranged in such a way that the respective oblique faces are facing; and in which the first and second adjusting wedge elements comprise, respectively, a lateral face, an upper oblique face and a lower oblique face, in which the upper and lower oblique faces are converging and in which the adjusting wedge elements are arranged in such a way that their respective oblique faces are facing; and in which the upper oblique faces act, respectively, on the oblique faces of the first supporting wedge element and the lower oblique faces act, respectively, on the oblique faces of the second supporting wedge element, in which the support device includes a sensor device configured to provide an overload or alarm signal in the event of exceeding a predetermined limit load;
(2) a support device as at point 1, where the adjusting member comprises a longitudinal body, terminating at both ends with a first and a second threaded portion, and stricker elements placed on that first and second threaded portion, respectively, the adjusting member being inserted into a through hole on the side faces of the adjusting wedge elements, in such a way that the threaded portions and their respective stricker elements emerge outside the adjusting wedge elements;
(3) a support device as in point 1, where the adjusting member comprises a single screw comprising a longitudinal body having a threaded portion and a locking end, the threaded portion being coupled to a stricker element, the adjusting member being inserted into a through hole on the side faces of the adjusting wedge elements, in such a way that the locking end and the threaded portion emerge from the outside of the adjusting wedge elements;
(4) a support device as at any of the points 2 or 3, where the side faces of the adjusting wedge elements include reinforcing plates;
(5) a support device as in any of points 2 to 4, where that sensor device is operationally associated with that adjusting member;
(6) a support device as in point 5, in which the adjusting member includes a sensor device consisting of a force gauge, arranged axially and emerging from one end of the longitudinal body;
(7) a support device as in point 5, where the adjusting member includes externally, in a substantially central position, a sensor device consisting of one or more strain gauges or strain gauge rosettes;
(8) a support device such as at any of points 1 to 7, where that sensor device is coupled to a visual signalling element, close to the sensor or remote, and/or to an emitter of an audible or electrical alarm signal placed at the support device or at a remote location, for example, it can be acquired through a computer system;
(9) a system for controlling and managing the distribution of a heavy load including:
   - a plurality of support devices as in any of the points 1 to 8, and
   - a command and control unit configured to receive load data from each of those support devices and to provide a user with an overload or alarm signal in the event that a predetermined limit load is exceeded on one or more support devices of that plurality of support devices;
(10) a system as in point 9, where each of the support devices is connected to the command and control unit by means of direct cabling or by exploiting telecommunication services with a remote command and control unit, e.g. connection/telecommunication services made available via the web, including through distributed remote processing through cloud technologies;
11) a system as in point 9, in which the connection between the support devices and the command and control unit is made by wireless systems, or mixed systems that provide for a connection by wiring with a transmitter and a wireless connection with a receiver connected via web or cloud to a remote command and control unit.

Further characteristics and advantages of the present invention will be further shown by the description of some examples of realization, made below by way of example and not exhaustively, with reference to the following figures.

### Brief description of the figures

Figure 1A shows a perspective view of a leveller according to a first embodiment;
Figure 1B shows a side view of the leveler of Figure 1A;
Figure 1C shows a view according to section I-I of figure 1B;
Figure 1D shows a perspective view of a detail of the leveler in figure 1A;
Figure 2A shows a side view of a second embodiment of the leveler of the invention;
Figure 2B shows a view according to section II-II of figure 2A;
Figure 2C shows a perspective view of a detail of the leveler in Figure 2A
Figures 3A, 3B, 3C and 3D show a diagram of a system of connection and control of the levellers of the invention according to four different embodiments;

### Detailed description of the invention

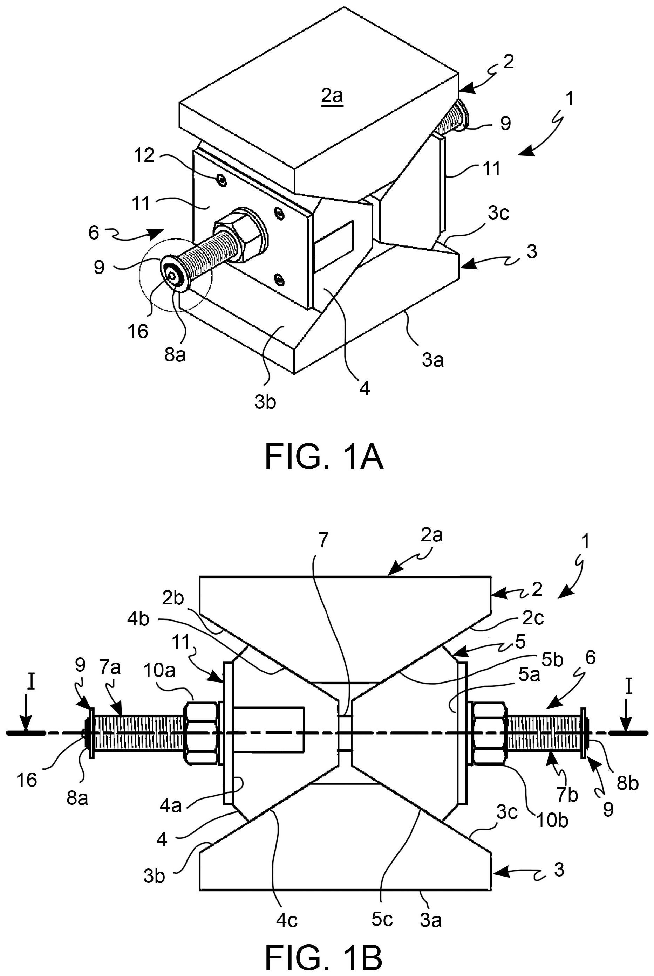

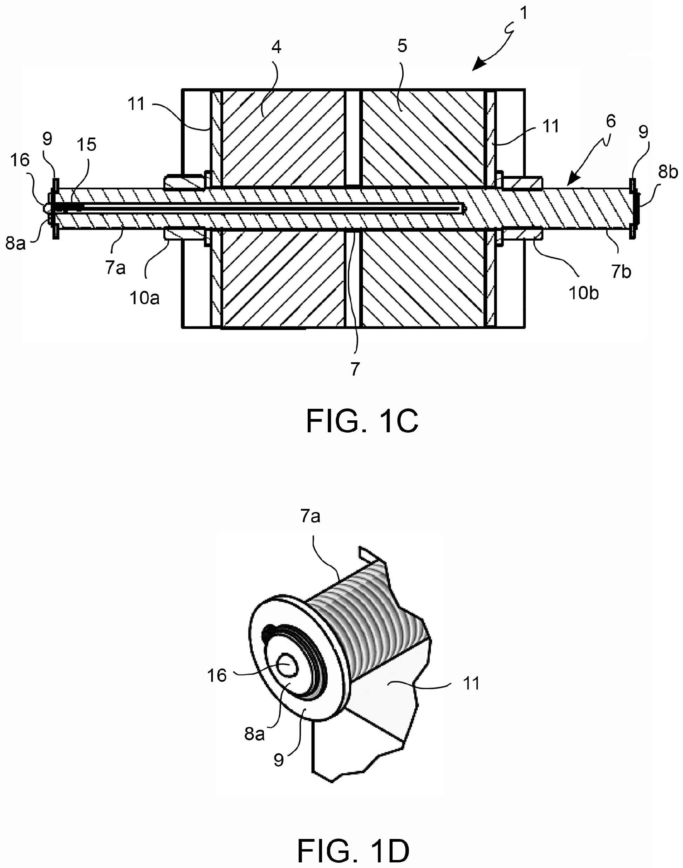

For the purposes of the present invention, terms such as "downward" or "upward" or "upper" or "lower" shall be understood by reference to Figure 1, which represents a normal position of use.

With reference to the figures, the heavy-duty support device, which is the subject of the present invention, also known as a leveller, referred to as a whole by number 1, comprises a first and second support wedge element 2, 3, a first and a second adjusting wedge element 4, 5 and an adjusting member 6 of the reciprocal distance between these first and second adjusting wedge element 4, 5.

The first support wedge element 2 includes an upper face 2a, intended for supporting the heavy load, and two converging oblique faces 2b, 2c. Similarly, the second support wedge element 3 includes a lower face 3a, intended for the support of leveller 1 on a fixed surface (e.g., the floor of a construction site), and two converging oblique faces 3b, 3c. The first and second support wedge elements 2, 3 are arranged in leveler 1 in such a way that the respective oblique faces 2b, 2c, 3b, 3c are facing each other. In other words, the two support wedge elements 2, 3 are placed in an inverted position.

The upper face 2a can be flat or have different shapes, for example V-shaped, or concave.

The first and second adjusting wedge elements 4, 5 comprise, respectively, a lateral face 4a, 5a, an upper oblique face 4b, 5b and a lower oblique face 4c, 5c, in which the upper oblique faces 4b, 5b and lower 4c, 5c are convergent and in which the adjusting wedge elements 4, 5 are arranged in leveller 1 in such a way that the respective oblique faces 4b, 4c, 5b, 5c are facing each other and in which, in leveller 1, the upper oblique faces 4b, 5b act, respectively, on the oblique faces 2b, 2c of the first support wedge element 2 and the lower oblique faces 4c, 5c act, respectively, on the oblique faces 3b, 3c of the second support wedge element 3.

The adjusting member 6, also known as the tie rod, comprises a longitudinal body 7, ending at both ends with a first 7a and a second threaded portion 7b, and stricker elements 10a, 10b, e.g. nuts, placed on the first and second threaded portions 7a, 7b, respectively. The adjusting member 6 is inserted into a through-hole on the side faces 4a, 5a of the adjusting wedge elements 4, 5, in such a way that the threaded portions 7a, 7b and the corresponding stricker elements 10a, 10b emerge outside the adjusting wedge elements 4, 5.

By screwing the stricker elements 10a, 10b, the adjusting wedge elements 4 and 5 are brought closer together, so that the first support wedge element 2 is lifted by sliding the inclined planes. This allows the height of the leveler 1 to be adjusted and therefore to the load it supports.

At ends 8a, 8b of the adjusting member 6 there are retaining rings 9 to prevent the adjusting member 6 from slipping out of the adjusting wedge elements 4, 5.

Taking into account that the support wedge elements 2, 3 and adjusting elements 4, 5 are preferably made of rigid plastic material in order to limit weight and friction, the side faces 4a, 5a of the adjusting wedge elements 4, 5 on which the stricker elements 10a, 10b act may include reinforcement plates 11, which can be attached to the adjusting wedge elements 4, 5 by means of screws 12.

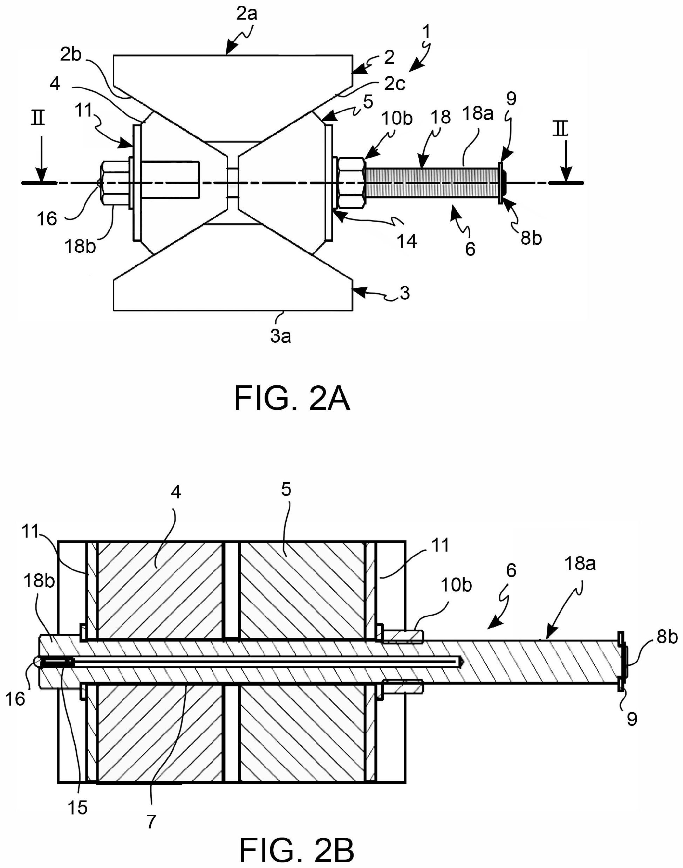

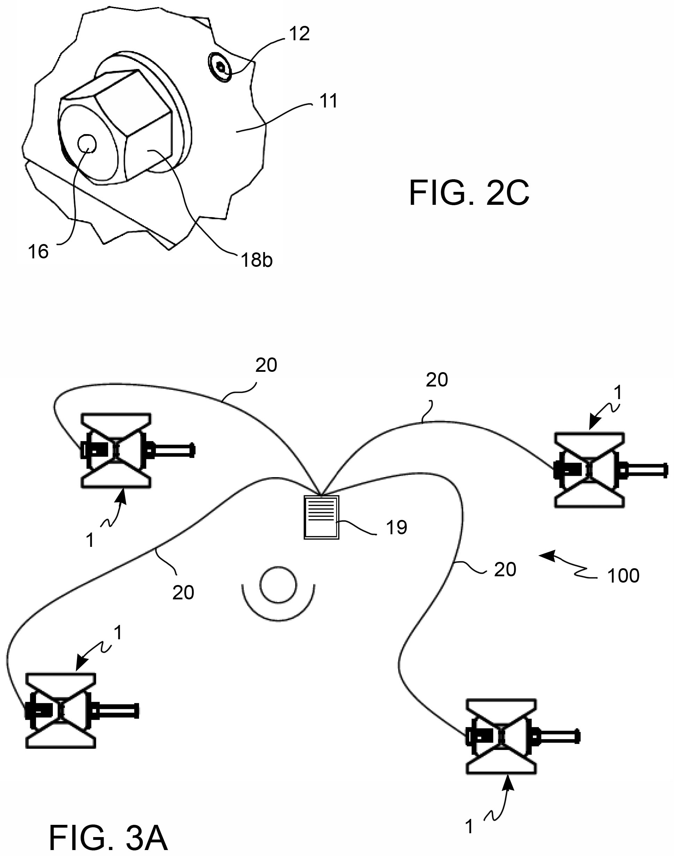

In a different embodiment, shown in figures 2A, 2B and 2C, the adjusting member 6 comprises a single screw 18 comprising a longitudinal body 7 having a threaded portion 18a and a locking end 18b, the threaded portion 18a being coupled to a stricker element 10b, e.g. a nut and a relative washer 14.

According to the invention, leveller 1 is characterized by the fact that it includes a sensor device configured for determining the load applied to the upper face 2a of the support wedge element 2 and for signaling an overload or alarm in the event of exceeding a predetermined limit load.

Thanks to the geometry of leveler 1, the tensile force that will be determined by the sensor device will be directly proportional to the load applied on the upper face 2a of leveler 1. It will then be possible to convert, in a known way, the measurement reading of the sensor device into the real load applied on the leveler.

In the embodiment shown in the figures, the longitudinal body 7 contains a sensor device consisting of a force meter 15, e.g. a strain gauge, arranged axially and terminating at one end 8a of the longitudinal body 7 with a visual signal element 16, e.g. an LED, a mechanical or chemical switch.

In the embodiment of figures 2A, 2B and 2C, the visual signalling element 16 is placed at the locking end 18b.

In different embodiments (not shown), the sensor device consists of a force sensor, also called a ring force transducer, arranged between a stricker element 10a, 10b and the reinforcement plate 11, or it will be integrated into a stricker element 10a, 10b.

In other embodiments (not shown), the longitudinal body 7 may include externally, in a substantially central position, a sensor device consisting of one or more strain gauges or strain gauge rosettes.

In all embodiments, this force sensor can be coupled to a visual signalling element 16, close to the sensor or remote, and/or to an emitter of an audible or electrical alarm signal placed at leveller 1 or in a remote location, for example which can be acquired through a computer system.

For example, the visual signal element 16 can provide a coloured light signal, e.g. green in the event of correct operation and red in the event of overload/alarm.

A further object of the present invention is a 100 system for the control and management of the distribution of a heavy load which includes:
- a plurality of levellers 1 as described above, and
- a command and control unit 19 configured to receive load data from each of these levellers and to provide a user with an overload or alarm signal in the event of exceeding a predetermined limit load on one or more levellers 1 of the said levellers 1.

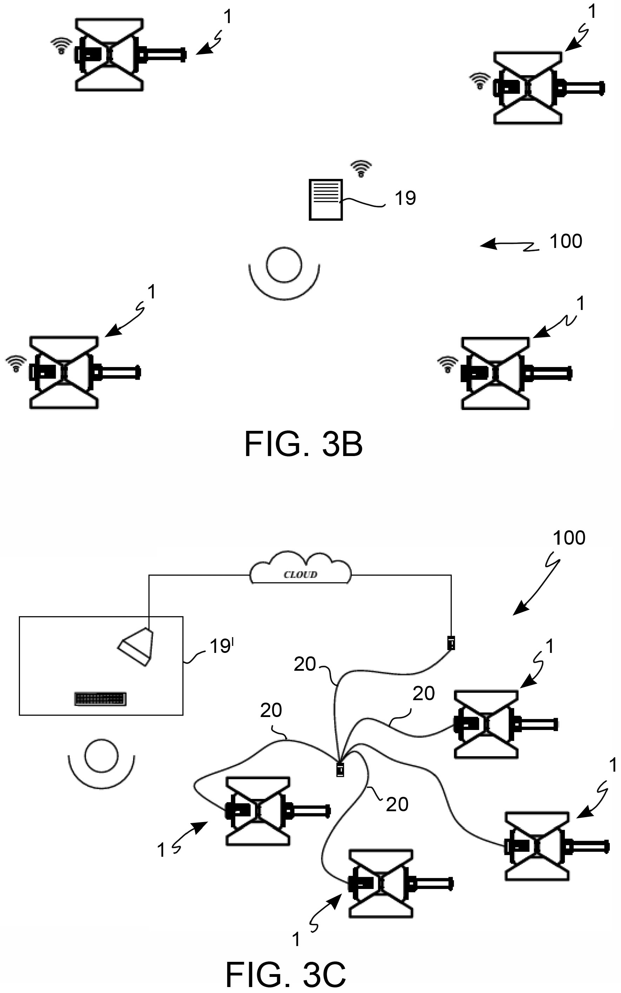

Each of the levellers 1 can be connected to the command and control unit 19 by means of appropriate wiring 20 directly (figure 3A) or by exploiting telecommunication services known in themselves with a remote command and control unit 19' (figure 3C), for example connection/telecommunication services made available via the web. This embodiment, in addition to communication with the command and control unit 19, 19', can also realize the implementation option of distributed remote processing, for example through cloud technologies.

Alternatively, as shown in figure 3B, the connection between the levellers 1 and the command and control unit 19 can be made by means of wireless systems.

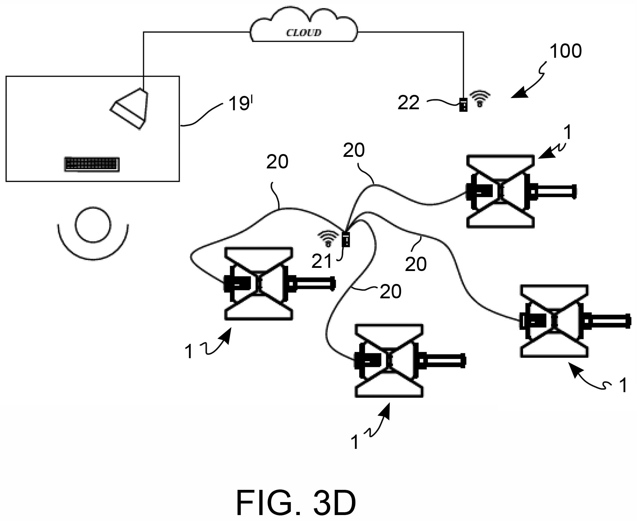

In a further alternative version, shown in figure 3D, mixed systems can be used that provide for a connection by wiring 20 with a transmitter 21 and a wireless connection with a receiver 22 connected via web or cloud to a remote command and control unit 19'.

The command and control unit 19, 19' will then be able to provide an audible or luminous alarm signal and/or overload information with indication of the code of the overloaded illuminator(s) 1. It may also include an event recording function to create a history of events.

The present invention therefore makes it possible to carry out a quantitative control of the load weighing on one or more levellers 1, with a clear advantage in terms of correctness of the levelling operation and safety of the construction site.

It is evident that only a few particular embodiments of the present invention have been described, to which the skilled person will be able to make all the changes necessary for its adaptation to particular applications, without however deviating from the scope of protection of the present invention as defined by the attached claims.

## Claims

1. A support device (1) for heavy-duty comprising a first and a second support wedge element (2, 3), a first and a second adjusting wedge element (4, 5), and an adjusting member (6) of the reciprocal distance between these first and second adjusting wedge elements (4, 5), in which the first support wedge element (2) comprises an upper face (2a), configured for the support of the heavy load, and two converging oblique faces (2b, 2c), and in which the second support wedge element (3) includes a lower face (3a), configured for the support device (1) to rest on a fixed surface, and two converging oblique faces (3b, 3c), the first and second support wedge elements (2, 3) being arranged in such a way that the respective oblique faces (2b, 2c, 3b, 3c) are facing; and in which the first and second adjusting wedge elements (4, 5) comprise, respectively, a lateral face (4a, 5a), an upper oblique face (4b, 5b) and a lower oblique face (4c, 5c), in which the upper (4b, 5b) and lower (4c, 5c) oblique faces converge and in which the adjusting wedge elements (4, 5) are arranged in such a way that their respective oblique faces (4b, 4c, 5b, 5c) are facing each other; and in which the upper oblique faces (4b, 5b) act, respectively, on the oblique faces (2b, 2c) of the first support wedge element (2) and the lower oblique faces (4c, 5c) act, respectively, on the oblique faces (3b, 3c) of the second support wedge element (3), **characterized by the fact that** the support device (1) includes a sensor device configured to provide an overload or alarm signal in case of exceeding a predetermined limit load.

2. The support device (1) according to claim 1, in which the adjusting member (6) comprises a longitudinal body (7), terminating at both ends with a first (7a) and a second threaded portion (7b), and stricker elements (10a, 10b) placed, respectively, on said first and second threaded portions (7a, 7b), the adjusting member (6) being inserted into a through hole on the side faces (4a, 5a) of the adjusting wedge elements (4, 5), in such a way that the threaded portions (7a, 7b) and their corresponding stricker elements (10a, 10b) emerge outside the adjusting wedge elements (4, 5).

3. The support device (1) according to claim 1, in which the adjusting member (6) comprises a single screw (18) comprising a longitudinal body (7) having a threaded portion (18a) and a locking end (18b), the threaded portion (18a) being coupled to a stricker element (10b), the adjusting member (6) being inserted into a through hole on the side faces (4a, 5a) of the adjusting wedge elements (4, 5), in such a way that the locking end (18b) and the threaded portion (18a) protrude outside the adjusting wedge elements (4, 5).

4. The support device (1) according to any of claims 2 or 3, where the side faces (4a, 5a) of the adjusting wedge elements (4, 5) comprise reinforcing plates (11).

5. The support device (1) according to any of claims 2 to 4, where said sensor device is operationally associated with said adjusting member (6).

6. The support device (1) according to claim 5, in which the adjusting member (6) contains a sensor device consisting of a force gauge (15), arranged axially and emerging from one end (8a) of the longitudinal body (7).

7. The support device (1) in accordance with claim 5, in which the adjusting member (6) externally comprises, in a substantially central position, a sensor device consisting of one or more strain gauge gauges or strain gauge rosettes.

8. The support device (1) according to any of claims 1 to 7, where said sensor device is coupled to a visual signalling element (16), either close to the sensor or remote, and/or to an emitter of an alarm sound or electrical signal placed at the support device (1) or at a remote location, for example, it can be acquired through a computer system.

9. A system (100) for the control and management of the distribution of a heavy load including:
- a plurality of support devices (1) according to any of the claims 1 to 8, and
- a command and control unit (19, 19') configured to receive load data from each of these support devices (1) and to provide a user with an overload or alarm signal in the event of exceeding a predetermined limit load on one or more support devices (1) of this plurality of support devices (1).

10. The system (100) according to claim 9, in which each of the supporting devices (1) is connected to the command and control unit (19) by cabling (20) directly or by using telecommunications services with a remote command and control unit (19'), e.g. connection/telecommunication services made available via the web, including via distributed remote processing via cloud technologies.

11. The system (100) according to claim 9, in which the connection between the support devices (1) and the command and control unit (19) is made by wireless systems, or mixed systems that provide for a connection by wiring (20) with a transmitter (21) and a wireless connection with a receiver (22) connected via web or cloud to a remote command and control unit (19').
